# EUROPEAN PATENT SPECIFICATION

(11) **EP 2 597 399 B1**
(45) Date of publication and mention of the grant of the patent: **21.02.2018**
(21) Application number: 12183017.8
(22) Date of filing: 04.09.2012
(51) Int. Cl.: F24D 19/10, F25B 13/00, F25B 25/00, F24D 11/02, F24D 3/18, F24F 3/06, F24F 11/00

(54) **Air Conditioner and Operation Method**
Klimaanlage und Betriebsverfahren
Climatiseur et procédé de fonctionnement

(30) Priority: 28.11.2011 KR 20110125288
(43) Date of publication of application: 29.05.2013
(73) Proprietor: LG Electronics Inc., Yeongdeungpo-gu Seoul 150-721 (KR)
(72) Inventor: Hwang, Junhyeon, Kyungsangnam-do, 641-110 (KR); Choi, Hongseok, Kyungsangnam-do, 641-110 (KR); Cho, Changhwan, Kyungsangnam-do, 641-110 (KR)
(74) Representative: Vossius & Partner Patentanwälte Rechtsanwälte mbB

(56) References cited:
- WO-A1-2011/114368
- GB-A- 2 253 037
- US-A- 5 184 472

## Description

The present invention relates to an air conditioner and an operation method of the same, and more particularly, to an air conditioner, which has a water-refrigerant heat exchanger for heat exchange between heat source water and a refrigerant.

Generally, an air conditioner is an appliance for cooling or heating a room using a refrigerating cycle of a refrigerant, which performs a cooling operation or a heating operation by sequentially compressing, condensing, expanding, and evaporating the refrigerant and absorbing the surrounding heat when the refrigerant is vaporized and releasing the heat when the refrigerant is liquefied.

The air conditioner is able to condense or evaporate the refrigerant with outdoor air, and also able to condense or evaporate the refrigerant with heat source water.

The air conditioner includes a water-refrigerant heat exchanger for heat exchange between heat source water and a refrigerant, which is installed between a compressor and an expansion device to allow the refrigerant to be condensed or evaporated with water.

To the water-refrigerant heat exchanger, an inflow path for supplying heat source
water to the water-refrigerant heat exchanger and an outflow path for allowing the heat source water heat-exchanged with the refrigerant to flow out of the plate-type heat exchanger. A pump and a variable flow valve may be installed in the inflow path or the outflow path.

WO 2011/114368 A1 relates to an air-conditioning apparatus applied to, for example, a multi-air-conditioning apparatus for building use. WO 2011/114368 A1 discloses an air-conditioning apparatus according to the preamble of claim 1.

GB 2 253 037 A relates to an air conditioning apparatus in which one outdoor unit is connected to one or a plurality of indoor units.

It is an object of the present invention to provide an air conditioner, which allows a central controller to control both an outdoor unit and a variable flow valve through a variable flow valve control board.

To accomplish the above-mentioned objects, the present invention provides an air conditioner including: according to claim 1.

The second communication line may allow for longer distance communication than that the first communication line.

The variable flow valve control board may be connected to the variable flow valve by a control line for transmitting an output value to the variable flow valve.

The variable flow valve control board may be provided with: a variable flow valve connector to which a control line is connected; an outdoor unit controller communication port to which the first communication line is connected; and a central controller communication port to which the second communication line is connected.

The variable flow valve control board may be composed of a single board.

The variable flow valve control board, together with the outdoor unit PCB, may be installed in the outdoor units.

The first communication line may use a long-distance communication method.

The second communication line may use a short-distance communication method.

The variable flow valve may be installed in singular number on a common flow path of the heat source water flow path, and the variable flow valve control board may be installed in any one of the plurality of outdoor units.

The variable flow valve may be installed on water-refrigerant heat exchange connecting flow paths, respectively, of the heat source water flow path, and the variable flow valve control board may be installed in each of the plurality of outdoor units.

A manipulation part for manipulating the operation capacity of the outdoor units and the circulation flow rate of the heat source water of the variable flow valve may be installed in the central controller.

If a signal from the central controller is a signal for increasing the operation capacity of the outdoor units, the variable flow valve control board may transmit the signal for increasing the operation capacity of the outdoor units to the outdoor unit controller, and if a signal from the central controller is a signal for decreasing the operation capacity of the outdoor units, the variable flow valve control board may transmit the signal for decreasing the operation capacity of the outdoor units to the outdoor unit controller.

If a signal from the central controller is a signal for increasing the range of the circulation flow rate of heat source water, the variable flow valve control board may regulate the variable flow valve to have a broader range of increase or decrease in the opening degree, and if a signal from the central controller is a signal for decreasing the range of the circulation flow rate of heat source water, the variable flow valve control board may regulate the variable flow valve to have a narrower range of increase or decrease in the opening degree.

The present invention is advantageous in that, if a gateway is installed between the central controller and the outdoor units, the structure becomes simpler because the central controller can control both the outdoor units and the variable flow valve by means of the variable flow valve control board.

Moreover, there is the advantage that the reliability is high because the central controller is able to control both the operation capacity of the outdoor units and the variable flow valve.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view showing the configuration of an air conditioner according to one exemplary embodiment of the present invention;
FIG. 2 is a view showing the internal configuration of an indoor unit shown in FIG. 1;
FIG. 3 is a view showing the internal configuration of an outdoor unit shown in FIG. 1;
FIG. 4 is a schematic view showing an outdoor unit PCB and a variable flow valve control board according to one exemplary embodiment of the present invention;
FIG. 5 is an enlarged view showing the variable flow valve control board shown in FIG. 4; and
FIG. 6 is a view showing the configuration of an air conditioner according to another exemplary embodiment of the present invention.

### DETAILED DESCRIPTION OF THE PREFERRED EMBODIMENTS

Hereinafter, an air conditioner according to an exemplary embodiment of the present invention will be described below with reference to the accompanying drawings.

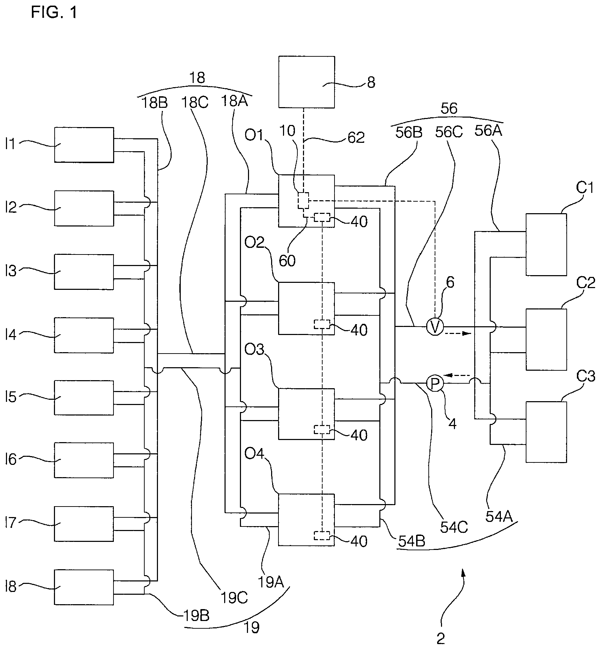

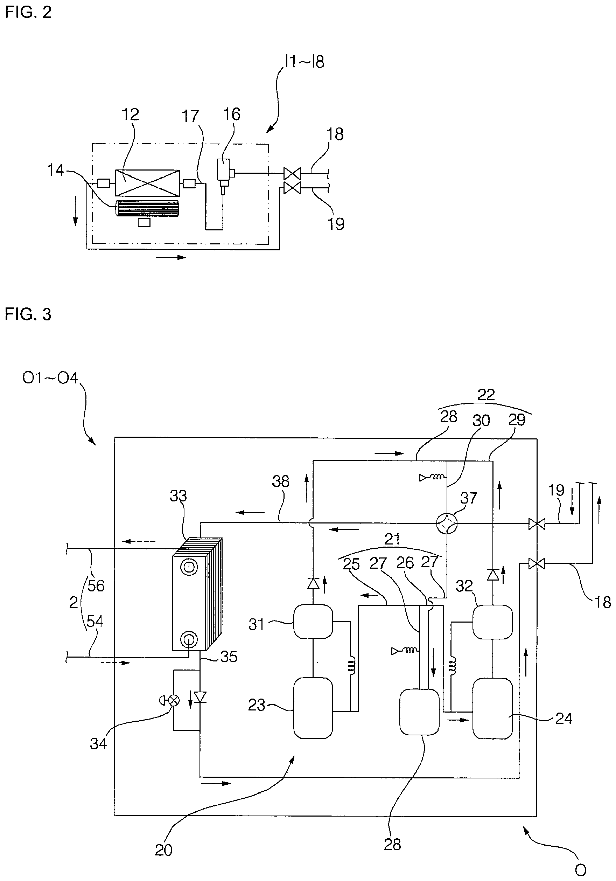

FIG. 1 is a view showing the configuration of an air conditioner according to one exemplary embodiment of the present invention. FIG. 2 is a view showing the internal configuration of an indoor unit shown in FIG. 1. FIG. 3 is a view showing the internal configuration of an outdoor unit shown in FIG. 1.

The air conditioner of the present invention may include a plurality of indoor units I1 to 18, a plurality of outdoor units O1 to O4, a heat source water flow path 2, a pump 4, a variable flow valve 6, a central controller 8, and a variable flow valve control board 10.

As shown in FIG. 2, an indoor heat exchanger 12 may be installed in the indoor unit I1 to I8. The indoor heat exchanger 12 can cool or heat a room by heat exchange between indoor air and a refrigerant. The indoor units I1 to I8 may include an indoor fan 14 for blowing indoor air to the indoor heat exchanger 12 and then discharging it to the room. The indoor unit I1 to I8 may include an indoor expansion device 16 for expanding the refrigerant flowing to the indoor heat exchanger 12. The indoor expansion device 16 may be an electronic expansion valve such as an LEV valve. The indoor expansion device 16 may be connected to the indoor heat exchanger 12 by an indoor heat exchanger connecting flow path 17. The indoor heat exchanger 12 may function as an evaporator for evaporating the refrigerant by heat exchange with indoor air when a low-temperature low-pressure refrigerant expanded by the indoor expansion device 16 passes therethrough; whereas, the indoor heat exchanger 12 may function as a condenser for condensing the refrigerant by heat-exchange with indoor air when a high-temperature high-pressure refrigerant flowing from the outdoor unit O1 to O4 passes therethrough.

The plurality of outdoor units O1 to O4 may be connected to the plurality of indoor units I1 to I8 by refrigerant flow paths 18 and 19. The refrigerant flow path 18 may include a liquid pipe 18 through which a liquid refrigerant passes and a gas pipe 19 through which a gas-phase refrigerant passes. The liquid pipe 18 may include an outdoor unit connecting liquid pipe 18A connected to the outdoor units, an indoor unit connecting liquid pipe 18B connected to the indoor units, and a common liquid pipe 18C connecting the outdoor unit connecting liquid pipe 18A and the indoor unit connecting liquid pipe 18B. The gas pipe 19 may include an outdoor unit connecting gas pipe 19A connected to the outdoor units, an indoor unit connecting gas pipe 19B connected to the indoor units, and a common gas pipe 19C connecting the outdoor unit connecting gas pipe 19A and the indoor unit connecting gas pipe 19B.

As shown in FIG. 3, each of the outdoor units O1 to O4 may include a compression part 20 for sucking and compressing a refrigerant and then discharging it. The compression part 20 sucks and compresses the refrigerant of a refrigerant intake passage 21 and then discharges it to a refrigerant discharge passage 22. The compression part 20 may be configured to be variable in capacity. The compression part 20 includes at least one compressor 23 and 24 connected to the refrigerant intake passage 21 and the refrigerant discharge passage 22. The compressor 23 and 24 may include one inverter compressor having a variable compression capacity, or may include an inverter compressor 23 with variable compression capacity and a constant speed compressor 24 having a constant compression capacity. The following description will be made with respect to an example including the inverter compressor 23 and the constant speed compressor 24. The refrigerant intake passage 21 may be connected in parallel to the inverter compressor 23 and the constant speed compressor 24. The refrigerant intake passage 21 may include an inverter compressor intake passage 25 connected to the inverter compressor 23, a constant speed compressor intake passage path 26 connected to the constant speed compressor 24, and a common intake passage 27 connected to the inverter compressor intake passage 25 and the constant speed compressor intake passage 26. An accumulator 28 for accumulating a liquid refrigerant among the refrigerant may be installed on the refrigerant intake passage 21. The accumulator 28 may be installed on the common intake passage 27. The refrigerant discharge passage 22 may be connected in parallel to the inverter compressor 23 and the constant speed compressor 24. The refrigerant discharge passage 22 may include an inverter compressor discharge passage 28 connected to the inverter compressor 23, a constant speed compressor discharge passage 29 connected to the constant speed compressor 24, and a common discharge passage 30 connected to the inverter compressor discharge passage 28 and the constant speed discharge passage 29. An inverter compressor oil separator 31 may be installed on the refrigerant discharge passage 22 to separate oil from the refrigerant discharged from the inverter compressor 23 and return it to the refrigerant intake passage 21. A constant speed compressor oil separator 32 may be installed on the refrigerant discharge passage 22 to separate oil from the refrigerant discharged from the constant speed compressor 24 and return it to the refrigerant intake passage 21.

Each of the outdoor units O1 to O4 may include a water-refrigerant heat exchanger 33 for heat exchange between a refrigerant and heat source water. The water-refrigerant heat exchanger 33 is a heat exchanger for condensing or evaporating a refrigerant by heat exchange with heat source water. The water-refrigerant heat exchanger 33 may be formed with a refrigerant heat exchange passage for condensing or evaporating a refrigerant passing therethrough and a heat source water heat exchange passage for heating or cooling heat source water passing therethrough. The heat source water flow path 2 may be connected to the water-refrigerant heat exchanger 33. A description of the heat source water flow path 2 will be made in detail later.

Each of the outdoor units O1 to O4 may include an outdoor expansion device 34 for expanding the refrigerant flowing to the water-refrigerant heat exchanger 34. The outdoor expansion device 34 may be connected to the water-refrigerant heat 33 by a water-refrigerant heat exchanger connecting flow path 35. The outdoor expansion device 34 may be connected to the indoor expansion device 16 by the refrigerant flow path 18. The outdoor expansion device 34 may include an outdoor expansion valve for expanding the refrigerant passing therethrough during a heating operation, and may further include a bypass passage for allowing the refrigerant flowing from the water-refrigerant heat exchanger 33 to bypass the outdoor expansion valve during a cooling operation and a check valve installed on the bypass passage.

The air conditioner may be a combined cooling/heating air conditioner having a cooling cycle and a heating cycle, and may further include a cooling/heating switching valve for switching between a cooling operation and a heating operation. The cooling/heating switching valve 37 may be installed in each of the outdoor units O1 to O4, together with the compression part 20 and the outdoor expansion device 34. The cooling/heating switching valve 37 is connected to the refrigerant intake passage 21, the refrigerant discharge passage 22, the water-refrigerant heat exchanger 33, and the indoor heat exchanger 12. The cooling/heating switching valve 37 may be connected to the common intake passage 27 of the refrigerant intake passage 21. The cooling/heating switching valve 37 may be connected to the common discharge passage 30 of the refrigerant discharge passage 22. The cooling/heating switching valve 37 may be connected to the water-refrigerant heat exchanger 33 by a connecting passage 38. The cooling/heating switching valve 37 may be connected to the indoor heat exchanger 12 by the refrigerant flow path 19. In a cooling operation, the cooling/heating switching valve 37 can guide the refrigerant compressed in the compression part 20 and discharged to the refrigerant discharge passage 22 to flow to the water-refrigerant heat exchanger 33 and guide the refrigerant flowing from the indoor heat exchanger 12 to flow to the refrigerant intake passage 21. In a heating operation, the cooling/heating switching valve 37 can guide the refrigerant compressed in the compression part 20 and discharged to the refrigerant discharge passage 22 to flow to the indoor heat exchanger 12 and guide the refrigerant flowing from the water-refrigerant heat exchanger 33 to flow to the refrigerant intake passage 21.

An outdoor unit PCB 40 is installed in each of the outdoor units O1 to O4. The outdoor unit PCB 40 controls the compression part 20, and may control outdoor expansion device 34, and the cooling/heating switching valve 37 depending on the operation of the indoor units I1 to I8 and the low pressure and high pressure of the outdoor unit O1 to O4 where the outdoor unit PCB 40 is installed. The outdoor unit PCB 40 may be connected to the outdoor units PCB 40 of other outdoor units. In the air conditioner, one of a plurality of outdoor unit PCBs 40 may become a master outdoor unit PCB, and the other outdoor unit PCBs may become slave outdoor unit PCBs.

The heat source water flow path 2 may be connected to external heat exchange equipment C1 to C3 for heat-exchanging the heat source water, which is heat-exchanged with the refrigerant in the water-refrigerant heat exchanger 33, with outdoor air or ground heat. The heat source water flow path 2 may include an inflow path 54 for allowing the heat source water having passed through the external heat exchange equipment C1 to C3 to flow into the water-refrigerant heat exchanger 33 and an outflow path 56 for allowing the heat source water heat-exchanged with the refrigerant in the water-refrigerant heat exchanger 33 to flow out to the external heat exchange equipment C1 to C3. The external heat exchange equipment C1 to C3 may consist of a cooling tower for cooling the heat source water having flown out through the outflow path 56 with outdoor air, a ground heat exchanger for exchanging the heat source water having flow out through the outflow path 56 with ground heat, and a boiler for heating the heat source water having flow out through the outflow path 56, or may be a combination of the cooling tower, the ground heat exchanger, and the boiler. The inflow path 54 may include an external heat exchange equipment connecting inflow path 54A connected to external heat exchange equipment, a water-refrigerant heat exchanger connecting inflow path 54B connected to the water-refrigerant heat exchanger 33, and a common inflow path 54C connecting the outdoor heat exchange equipment connecting inflow path 54A and the water-refrigerant heat exchanger connecting inflow path 54B. The outflow path 56 may include an external heat exchange equipment connecting outflow path 56A connected to external heat exchange equipment, a water-refrigerant heat exchanger connecting outflow path 56B connected to the water-refrigerant heat exchanger 33, and a common outflow path 56C connecting the external heat exchange equipment connecting outflow path 56A and the water-refrigerant heat exchanger connecting outflow path 56B.

The pump 4 may be installed on the heat source water flow path 2.

The pump 4 can allow heat source water to circulate the water-refrigerant heat exchanger 33 and the external heat exchange equipment C1 to C3. The pump 4 can pump heat source water so that the heat source water circulates the water-refrigerant heat exchanger 33, the outflow path 56, the external heat exchange equipment C1 to C3, and the inflow path 54. The pump 4 may be installed on at least one of the inflow path 54 and the outflow path 56. The pump 4 may be installed on a common flow path of the heat source water flow path 2. That is, the pump 4 may be installed on a common inflow path 54C or a common outflow path 56C. The pump 4 may be a variable capacity pump, or an inverter pump which varies in capacity depending on input frequency, or a plurality of constant speed pumps having a variable pumping capacity. The pump 4 may include a pressure sensor for sensing a pressure. If a pressure drop becomes larger due to a decrease in the opening degree of the variable flow valve 6, the pressure sensor senses this, the number of turns of the pump 4 decreases, and the power consumption input to the pump 4 is minimized. On the contrary, if a pressure drop becomes smaller due to an increase in the opening degree of the variable flow valve 6, the pressure sensor senses this, and the number of turns of the pump 6 is increased.

The variable flow valve 6 may be installed on the heat source water flow path 2 to regulate the heat source water entering and exiting the water-refrigerant heat exchanger 33. The variable flow valve 6 may be a valve capable of regulating the opening degree. The variable flow valve 6 can vary the flow rate of the heat source water circulating the heat source water flow path 2 by regulating the opening degree. The variable flow valve 6 can be opened at the maximum opening degree when fully opened, and opened at the minimum opening degree when fully closed. The variable flow valve 6 can maximize the flow rate of the heat source water flow path 2 when the opening degree is maximum, and minimize the flow rate of the heat source water flow path 2 when the opening degree is minimum. The variable flow valve 6 may be installed on at least one of the inflow path 54 and the outflow path 56. The variable flow valve 6 may be installed in singular number on the common flow path of the heat source water flow path 2. That is, the variable flow valve 6 may be installed on the common inflow path 54C or the common outflow path 56C.

The central controller 8 may control the plurality of outdoor units O1 to O4. The central controller 8 is an air conditioner controller capable of controlling the plurality of outdoor units O1 to O4 altogether. If a manager of the air conditioner controls the plurality of outdoor units O1 to O4 by means of the central controller 8, each of the outdoor units O1 to O4 may be controlled under the control of the central controller 8, and the indoor units I1 to I8 may be controlled. A manipulation part for allowing the manager to manipulate the operation capacity of the outdoor units O1 to O4 and the circulation flow rate of the heat source water of the variable flow valve 6 may be installed in the central controller 8.

The variable flow valve control board 10, together with the outdoor unit PCB 40, may be installed in the outdoor units O1 to O4. The variable flow valve control board 10 may be installed in any one O1 of the plurality of outdoor units O1 to O4.

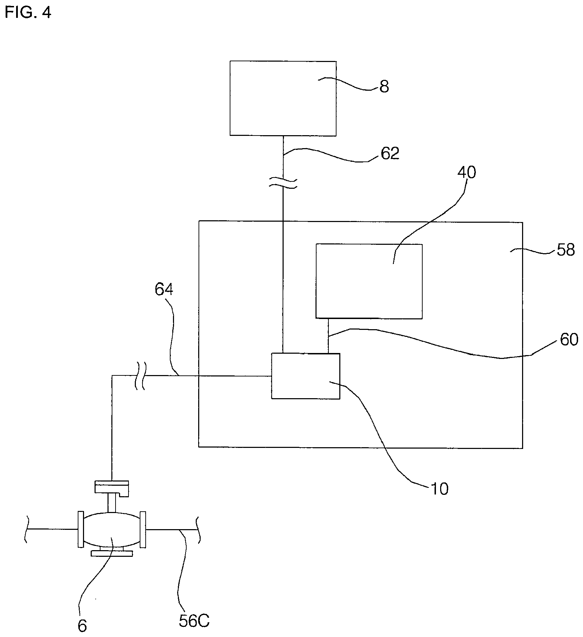

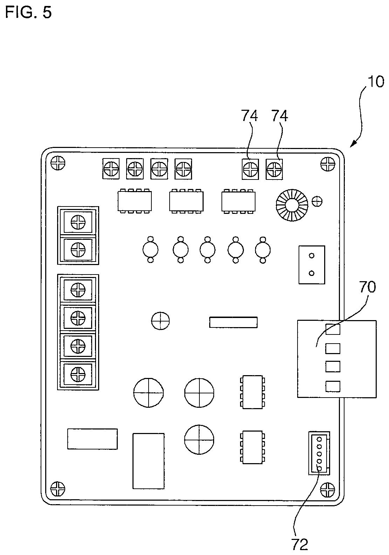

FIG. 4 is a schematic view showing an outdoor unit PCB and a variable flow valve control board according to one exemplary embodiment of the present invention. FIG. 5 is an enlarged view showing the variable flow valve control board shown in FIG. 4.

The variable flow valve control board 10, together with the outdoor unit PCB 40, may be installed in a control box 58 of one of the plurality of outdoor units O1 to O4. The variable flow valve control board 10 may be connected to the outdoor unit PCB 40 via a first communication line 60. The variable flow valve control board 10 may be connected to the central controller 8 via a second communication line 62 having a different communication method from that of the first communication line 60. The variable flow valve control board 10 is capable of protocol conversion between the central controller 8 and the outdoor unit PCB 40. The distance between the variable flow valve control board 10 and the central controller 8 may be longer than the distance between the variable flow valve control board 10 and the outdoor unit PCB 40. The second communication line 62 allows for longer distance communication than that the first communication line 60. The variable flow valve control board 10, together with the outdoor unit PCB 40, may be installed in the outdoor units, and may be connected to the outdoor unit PCB 40 via the first communication line 60 for short-distance communication such as TTC communication. The outdoor units O1 to O4 may be installed on the outside or rooftop of a building, and the central controller 8 may be installed in a central control room inside a building. The variable flow valve control board 10 may be connected to the central controller 8 via the second communication line 62 for long-distance communication such as 485 communication by taking the distance with the central controller 8 into account. The variable flow valve control board 10 is capable of performing protocol conversion according to the different communication methods of the first communication line 60 and the second communication line 62. The variable flow valve control board 10 may be composed of a single board. The air conditioner may include: a variable flow valve connector 70 to which a control line 64 transmitting an output value to the variable flow valve 6 is connected; an outdoor unit controller communication port 72 to which the first communication line 60 is connected; and a central controller communication port 72 to which the second communication line 62 is connected. As shown in FIG. 5, the variable flow valve connector 70, the outdoor unit controller communication port 72, and the central controller communication port 74 may be installed together on the variable flow valve control board 10. That is, the variable flow valve control board 10 may function as a heat source water flow regulator for regulating the flow rate of the heat source water circulating the water-refrigerant heat exchanger 33 by regulating the opening degree of the variable flow valve 6 and a gateway for performing protocol conversion between the central controller 8 and the outdoor unit PCB 40.

An operation of the present invention thus-configured will be described below.

First, the manager of the central controller 8 can regulate the operation capacity of the outdoor units O1 to O4 and the circulation flow rate of the heat source water of the variable flow valve 6 by manipulating the manipulation part of the central controller 8. A signal from the central controller 8 may be transmitted to the variable flow valve control board 10 via the second communication line 62.

The variable flow valve control board 10 can regulate the circulation flow rate of heat source water in response to the signal from the central controller 8. If the signal from the central controller 8 is a signal for increasing the range of the circulation flow rate of heat source water, the variable flow valve control board 10 can regulate the variable flow valve 6 to have a broader range of increase or decrease in the opening degree. If the signal from the central controller 8 is a signal for decreasing the range of the circulation flow rate of heat source water, the variable flow valve control board 10 can regulate the variable flow valve 6 to have a narrower range of increase or decrease in the opening degree. An operation method of the air conditioner may include: the central controller transmission step in which the central controller 8 transmits a range of the circulation flow rate of heat source water to the variable flow valve control board 10 installed in an outdoor unit to regulate the opening degree of the variable flow valve 6; and the variable flow valve control board transmission step in which the variable flow valve control board 10 converts the protocol of the signal transmitted from the central controller 8 and transmits the same to the variable flow valve 6.

If the signal from the central controller 8 is a signal for increasing the operation capacity of the outdoor units, the variable flow valve control board 10 can transmit the signal for increasing the operation capacity of the outdoor units to the outdoor unit controller 40, and the outdoor unit controller 40 can control the compression part 20 to increase the operation capacity of the outdoor units. If the signal from the central controller 8 is a signal for decreasing the operation capacity of the outdoor units, the variable flow valve control board 10 can transmit the signal for decreasing the operation capacity of the outdoor units to the outdoor unit controller 40, and the outdoor unit controller 40 can control the compression part 20 to decrease the operation capacity of the outdoor units. An operation method of the air conditioner may include: the central controller transmission step in which the central controller 8 transmits an outdoor unit operation capacity signal to the variable flow valve control board 10 installed in an outdoor unit to regulate the opening degree of the variable flow valve 6; and the variable flow valve control board transmission step in which the variable flow valve control board 10 converts the protocol of the signal transmitted from the central controller 8 and transmits the same to the outdoor unit controller 40 installed in the outdoor unit.

The central controller 8 can regulate both the operation capacity of the outdoor units O1 to O4 and the circulation flow rate of heat source water of the variable flow valve 6 by means of the variable flow valve control board 10, and the reliability of the air conditioner can be improved.

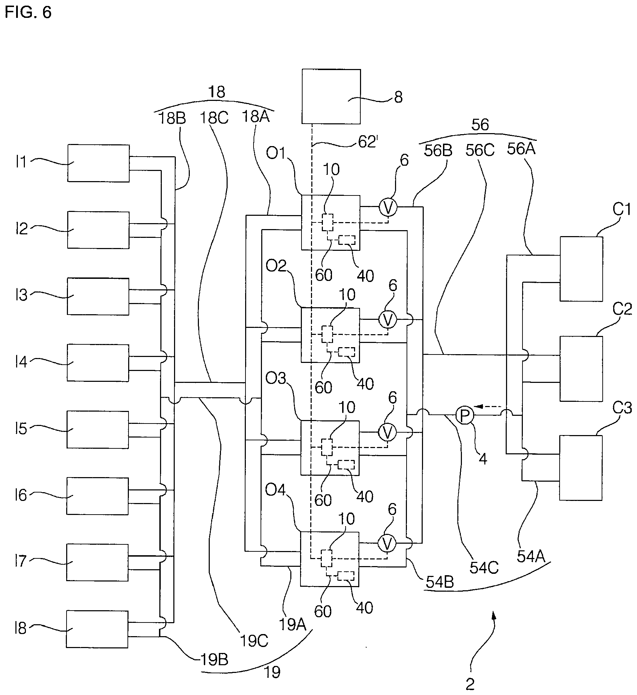

FIG. 6 is a view showing the configuration of an air conditioner according to another exemplary embodiment of the present invention.

In the air conditioner of this exemplary embodiment, the variable flow valve 6 may be installed on the water-refrigerant heat exchanger connecting flow paths 54B and 56B, respectively, of the heat source water flow path 2. The variable flow valve 6 may be installed on the water-refrigerant heat exchanger connecting inflow path 54B or the water-refrigerant heat exchanger connecting outflow path 56B for each of the outdoor units O1 to O4.

The variable flow valve control board 10 and the outdoor unit PCB may be installed in each of the plurality of outdoor units O1 to O4. The variable flow valve control board 10 may be connected to the outdoor unit PCB 40 of each of the outdoor units O1 to O4 via the first communication line 60. A plurality of variable flow valve control boards 10 may be connected to the central controller 8 via the second communication line 62'. The variable flow valve control board 10 may perform protocol conversion between the central controller 8 and the outdoor unit PCB 40 installed in each of the outdoor units O1 to O4.

## Claims

1. An air conditioner comprising:
a plurality of indoor units (I1 to I8) each having an indoor heat exchanger (12) installed therein;
a plurality of outdoor units (O1 to O4) and an outdoor unit PCB (40) installed in each of the outdoor units (O1 to O4) for controlling a compression part (20) of the outdoor units (O1 to O4); a heat source water flow path (2), a pump (4) installed on the heat source water flow path (2) and a variable flow valve (6) installed on the heat source water flow path (2) and capable of regulating the opening degree;
**characterized by** said plurality of outdoors units (O1 to O4) being connected to the plurality of indoor units (I1 to I8) by a refrigerant flow path (18, 19), wherein each of the plurality of outdoor units (O1 to O4) has a water-refrigerant heat exchanger (33) for heat exchange between a refrigerant and heat source water, said heat source water flow path (2) being connected to the water-refrigerant heat exchangers (33); wherein the air conditioner further comprises a central controller (8) for controlling the plurality of outdoor units (O1 to O4); and
a variable flow valve control board (10) for regulating the opening degree of the variable flow valve and regulating the flow rate of heat source water,
wherein the variable flow valve control board (10) is connected to the outdoor unit PCB (40) via a first communication line (60), is connected to the central controller (8) via a second communication line (62) having a different communication method from that of the first communication line (60), and performs protocol conversion between the central controller (8) and the outdoor unit PCB (40).

2. The air conditioner of claim 1, wherein the second communication line (62) allows for longer distance communication than that the first communication line (60).

3. The air conditioner of claim 1 or 2, wherein the variable flow valve control board (10) is connected to the variable flow valve (6) by a control line (64) for transmitting an output value to the variable flow valve (6).

4. The air conditioner of claim 3, wherein the variable flow valve control board (10) is provided with:
a variable flow valve connector (70) to which a control line (64) is connected
an outdoor unit controller communication port (72) to which the first communication line (60) is connected; and
a central controller communication port (74) to which the second communication line (62) is connected.

5. The air conditioner of any of claims 1 to 4, wherein the variable flow valve control board (10) is composed of a single board.

6. The air conditioner of any of claims 1 to 5, wherein the variable flow valve control board (10), together with the outdoor unit PCB (40), is installed in the outdoor units.

7. The air conditioner of any of claims 1 to 6, wherein the first communication line (60) uses a long-distance communication method.

8. The air conditioner of any of claims 1 to 7, wherein the second communication line (62) uses a short-distance communication method.

9. The air conditioner of any of claims 1 to 8, wherein the variable flow valve (6) is installed in singular number on a common flow path of the heat source water flow path (2).

10. The air conditioner of claim 9, wherein the variable flow valve control board (10) is installed in any one of the plurality of outdoor units (O1 to O4).

11. The air conditioner of any of claims 1 to 8, wherein the variable flow valve is installed on water-refrigerant heat exchange connecting flow paths, respectively, of the heat source water flow path.

12. The air conditioner of claim 11, wherein the variable flow valve control board (10) is installed in each of the plurality of outdoor units (O1 to O4).

13. The air conditioner of any of claims 1 to 12, wherein a manipulation part for manipulating the operation capacity of the outdoor units (O1 to O4) and the circulation flow rate of the heat source water of the variable flow valve (6) may be installed in the central controller (8).

14. The air conditioner of claim 13, wherein, if a signal from the central controller (8) is a signal for increasing the operation capacity of the outdoor units (O1 to O4), the variable flow valve control board (10) transmits the signal for increasing the operation capacity of the outdoor units (O1 to O4) to the outdoor unit controller, and if a signal from the central controller (8) is a signal for decreasing the operation capacity of the outdoor units (O1 to O4), the variable flow valve control board (10) transmits the signal for decreasing the operation capacity of the outdoor units (O1 to O4) to the outdoor unit controller.

15. The air conditioner of claim 13, wherein, if a signal from the central controller (8) is a signal for increasing the range of the circulation flow rate of heat source water, the variable flow valve control board (10) regulates the variable flow valve (6) to have a broader range of increase or decrease in the opening degree, and if a signal from the central controller (8) is a signal for decreasing the range of the circulation flow rate of heat source water, the variable flow valve control board (10) regulates the variable flow valve (6) to have a narrower range of increase or decrease in the opening degree.

16. A method of operating an air conditioner according to any of claims 1 to 15.

## Patentansprüche

1. Klimaanlage aufweisend:
mehrere Inneneinheiten (I1 bis 18) mit jeweils einem darin eingebauten InnenWärmetauscher (12);
mehrere Außeneinheiten (O1 bis O4) und eine in jeder der Außeneinheiten (O1 bis O4) eingebaute PCB-Außeneinheit (40) zur Steuerung eines Kompressionsteils (20) der Außeneinheiten (O1 bis O4);
einen Wärmequellewasserströmungspfad (2), eine an dem Wärmequellewasserströmungspfad (2) installierte Pumpe (4) und ein an dem Wärmequellewasserströmungspfad (2) installiertes Strömungsanpassungsventil (6) mit regulierbarem Öffnungsgrad;
**dadurch gekennzeichnet, dass** die mehreren Außeneinheiten (O1 bis O4) mit den mehreren Inneneinheiten (I1 bis 18) über einen Kältemittelströmungspfad (18, 19) verbunden sind, wobei jede der mehreren Außeneinheiten (O1 bis O4) einen Wasser/Kältemittel-Wärmetauscher (33) für einen Wärmeaustausch zwischen einem Kältemittel und Wärmequellewasser aufweist, wobei der Wärmequellewasserströmungspfad (2) mit den Wasser/Kältemittel-Wärmetauschern (33) verbunden ist;
wobei die Klimaanlage ferner aufweist:
eine Zentralsteuerung (8) zur Steuerung der mehreren Außeneinheiten (O1 bis O4); und
eine Strömungsanpassungsventil-Steuerkarte (10) zur Regelung des Öffnungsgrads des Strömungsanpassungsventils und Regelung der Strömungsrate des Wärmequellewassers,
wobei die Strömungsanpassungsventil-Steuerkarte (10) über eine erste Kommunikationsleitung (60) mit der PCB-Außeneinheit (40) verbunden ist, über eine zweite Kommunikationsleitung (62), deren Kommunikationsverfahren sich von demjenigen der ersten Kommunikationsleitung (60) unterscheidet, mit der Zentralsteuerung (8) verbunden ist und eine Protokollkonversion zwischen der Zentralsteuerung (8) und der PCB-Außeneinheit (40) durchführt.

2. Klimaanlage nach Anspruch 1, wobei die zweite Kommunikationsleitung (62) eine Kommunikation über eine längere Strecke erlaubt als die erste Kommunikationsleitung (60).

3. Klimaanlage nach Anspruch 1 oder 2, wobei die Strömungsanpassungsventil-Steuerkarte (10) über eine Steuerleitung (64) mit dem Strömungsanpassungsventil (6) verbunden ist, um einen Ausgabewert zu dem Strömungsanpassungsventil (6) zu senden.

4. Klimaanlage nach Anspruch 3, wobei die Strömungsanpassungsventil-Steuerkarte (10) versehen ist mit:
einem Strömungsanpassungsventil-Anschluss (70), an welchem eine Steuerleitung (64) angeschlossen ist;
einem Außeneinheitsteuerung-Kommunikationsanschluss (72), an welchem die erste Kommunikationsleitung (60) angeschlossen ist; und
einem Zentralsteuerung-Kommunikationsanschluss (74), an welchem die zweite Kommunikationsleitung (62) angeschlossen ist.

5. Klimaanlage nach einem der Ansprüche 1 bis 4, wobei die Strömungsanpassungsventil-Steuerkarte (10) aus einer einzigen Karte besteht.

6. Klimaanlage nach einem der Ansprüche 1 bis 5, wobei die Strömungsanpassungsventil-Steuerkarte (10) zusammen mit der PCB-Außeneinheit (40) in den Außeneinheiten eingebaut ist.

7. Klimaanlage nach einem der Ansprüche 1 bis 6, wobei die erste Kommunikationsleitung (60) ein Langstreckenkommunikationsverfahren verwendet.

8. Klimaanlage nach einem der Ansprüche 1 bis 7, wobei die zweite Kommunikationsleitung (62) ein Kurzstreckenkommunikationsverfahren verwendet.

9. Klimaanlage nach einem der Ansprüche 1 bis 8, wobei das Strömungsanpassungsventil (6) ein einziges ist, das an einem gemeinsamen Strömungspfad des Wärmequellewasserströmungspfads (2) eingebaut ist.

10. Klimaanlage nach Anspruch 9, wobei die Strömungsanpassungsventil-Steuerkarte (10) in irgendeiner der mehreren Außeneinheiten (O1 bis O4) eingebaut ist.

11. Klimaanlage nach einem der Ansprüche 1 bis 8, wobei das Strömungsanpassungsventil an jeweiligen verbindenden Wasser/Kältemittel-Wärmeaustauschströmungspfaden des Wärmequellewasserströmungspfads eingebaut ist.

12. Klimaanlage nach Anspruch 11, wobei die Strömungsanpassungsventil-Steuerkarte (10) in jeder der mehreren Außeneinheiten (O1 bis O4) eingebaut ist.

13. Klimaanlage nach einem der Ansprüche 1 bis 12, wobei in der Zentralsteuerung (8) ein Manipulationsteil zum Manipulieren der Betriebskapazität der Außeneinheiten (O1 bis O4) und der Wärmequellewasser-Zirkulationsströmungsrate des Strömungsanpassungsventils (6) eingebaut sein kann.

14. Klimaanlage nach Anspruch 13, wobei in dem Fall, dass ein Signal aus der Zentralsteuerung (8) ein Signal zur Erhöhung der Betriebskapazität der Außeneinheiten (O1 bis O4) ist, die Strömungsanpassungsventil-Steuerkarte (10) das Signal zur Erhöhung der Betriebskapazität der Außeneinheiten (O1 bis O4) zur Außeneinheitsteuerung sendet, und in dem Fall, dass ein Signal aus der Zentralsteuerung (8) ein Signal zur Erniedrigung der Betriebskapazität der Außeneinheiten (O1 bis O4) ist, die Strömungsanpassungsventil-Steuerkarte (10) das Signal zur Erniedrigung der Betriebskapazität der Außeneinheiten (O1 bis O4) zur Außeneinheitsteuerung sendet.

15. Klimaanlage nach Anspruch 13, wobei in dem Fall, dass ein Signal aus der Zentralsteuerung (8) ein Signal zur Vergrößerung des Bereichs der Zirkulationsströmungsrate des Wärmequellenwassers ist, die Strömungsanpassungsventil-Steuerkarte (10) das Strömungsanpassungsventil (6) so regelt, dass es einen breiteren Vergrößerungs- oder Verkleinerungsbereich des Öffnungsgrads hat, und in dem Fall, dass ein Signal aus der Zentralsteuerung (8) ein Signal zur Verkleinerung des Bereichs der Zirkulationsströmungsrate des Wärmequellenwassers ist, die Strömungsanpassungsventil-Steuerkarte (10) das Strömungsanpassungsventil (6) so regelt, dass es einen engeren Vergrößerungs- oder Verkleinerungsbereich des Öffnungsgrads hat.

16. Verfahren zum Betreiben einer Klimaanlage nach einem der Ansprüche 1 bis 15.

## Revendications

1. Climatiseur comprenant :
une pluralité d'unités intérieures (I1 à 18) ayant chacune un échangeur thermique intérieur (12) installé dans celles-ci ;
une pluralité d'unités extérieures (O1 à O4) et une carte de circuit imprimé d'unité extérieure (40) installée dans chacune des unités extérieures (O1 à O4) pour contrôler une pièce de compression (20) des unités extérieures (O1 à O4) ;
un trajet d'écoulement d'eau de source thermique (2), une pompe (4) installée sur le trajet d'écoulement d'eau de source thermique (2) et une vanne à écoulement variable (6) installée sur le trajet d'écoulement d'eau de source thermique (2) et capable de réguler le degré d'ouverture ;
**caractérisé par** ladite pluralité d'unités extérieures (O1 à O4) étant connectée à la pluralité d'unités intérieures (I1 à 18) par un trajet d'écoulement de réfrigérant (18, 19), dans lequel chacune de la pluralité d'unités extérieures (O1 à O4) a un échangeur thermique eau-réfrigérant (33) pour l'échange thermique entre un réfrigérant et l'eau de source thermique,
ledit trajet d'écoulement d'eau de source thermique (2) étant connecté aux échangeurs thermiques eau-réfrigérant (33) ; dans lequel le climatiseur comprend en outre
un contrôleur central (8) pour contrôler la pluralité d'unités extérieures (O1 à O4) ; et un tableau de contrôle de vanne à écoulement variable (10) pour réguler le degré d'ouverture de la vanne à écoulement variable et réguler le débit de l'eau de source thermique,
dans lequel le tableau de contrôle de vanne à écoulement variable (10) est connecté à la carte de circuit imprimé d'unité extérieure (40) au moyen d'une première ligne de communication (60), est connecté au contrôleur central (8) au moyen d'une seconde ligne de communication (62) ayant un procédé de communication différent de celui de la première ligne de communication (60), et réalise une conversion de protocole entre le contrôleur central (8) et la carte de circuit imprimé d'unité extérieure (40).

2. Climatiseur selon la revendication 1, dans lequel la seconde ligne de communication (62) permet une communication à plus longue distance que celle de la première ligne de communication (60).

3. Climatiseur selon la revendication 1 ou 2, dans lequel le tableau de contrôle de vanne à écoulement variable (10) est connecté à la vanne à écoulement variable (6) par une ligne de contrôle (64) pour transmettre une valeur de sortie à la vanne à écoulement variable (6).

4. Climatiseur selon la revendication 3, dans lequel le tableau de contrôle de vanne à écoulement variable (10) est fourni avec :
un connecteur de vanne à écoulement variable (70) auquel une ligne de contrôle (64) est connectée
un port de communication de contrôleur d'unité extérieure (72) auquel la première ligne de communication (60) est connectée ; et
un port de communication de contrôleur central (74) auquel la seconde ligne de communication (62) est connectée.

5. Climatiseur selon l'une quelconque des revendications 1 à 4, dans lequel le tableau de contrôle de vanne à écoulement variable (10) est composé d'un tableau unique.

6. Climatiseur selon l'une quelconque des revendications 1 à 5, dans lequel le tableau de contrôle de vanne à écoulement variable (10), avec la carte de circuit imprimé d'unité extérieure (40), est installé dans les unités extérieures.

7. Climatiseur selon l'une quelconque des revendications 1 à 6, dans lequel la première ligne de communication (60) utilise un procédé de communication à longue distance.

8. Climatiseur selon l'une quelconque des revendications 1 à 7, dans lequel la seconde ligne de communication (62) utilise un procédé de communication à courte distance.

9. Climatiseur selon l'une quelconque des revendications 1 à 8, dans lequel la vanne à écoulement variable (6) est installée dans un nombre singulier sur un trajet d'écoulement commun du trajet d'écoulement d'eau de source thermique (2).

10. Climatiseur selon la revendication 9, dans lequel le tableau de contrôle de vanne à écoulement variable (10) est installé dans l'une quelconque de la pluralité d'unités extérieures (O1 à O4).

11. Climatiseur selon l'une quelconque des revendications 1 à 8, dans lequel la vanne à écoulement variable est installée sur les trajets d'écoulement de connexion d'échange thermique eau-réfrigérant, respectivement, du trajet d'écoulement d'eau de source thermique.

12. Climatiseur selon la revendication 11, dans lequel le tableau de contrôle de vanne à écoulement variable (10) est installé dans chacune de la pluralité d'unités extérieures (O1 à O4).

13. Climatiseur selon l'une quelconque des revendications 1 à 12, dans lequel une pièce de manipulation pour manipuler la capacité de fonctionnement des unités extérieures (O1 à O4) et le débit de circulation de l'eau de source thermique de la vanne à écoulement variable (6) peut être installée dans le contrôleur central (8).

14. Climatiseur selon la revendication 13, dans lequel, si un signal du contrôleur central (8) est un signal pour augmenter la capacité de fonctionnement des unités extérieures (O1 à O4), le tableau de contrôle de vanne à écoulement variable (10) transmet le signal pour augmenter la capacité de fonctionnement des unités extérieures (O1 à O4) au contrôleur d'unité extérieure, et si un signal du contrôleur central (8) est un signal pour diminuer la capacité de fonctionnement des unités extérieures (O1 à O4), le tableau de contrôle de vanne à écoulement variable (10) transmet le signal pour diminuer la capacité de fonctionnement des unités extérieures (O1 à O4) au contrôleur d'unité extérieure.

15. Climatiseur selon la revendication 13, dans lequel, si un signal du contrôleur central (8) est un signal pour augmenter la plage du débit de circulation de l'eau de source thermique, le tableau de contrôle de vanne à écoulement variable (10) régule la vanne à écoulement variable (6) pour avoir une plage plus large d'augmentation ou de diminution du degré d'ouverture, et si un signal du contrôleur central (8) est un signal pour diminuer la plage du débit de circulation de l'eau de source thermique, le tableau de contrôle de vanne à écoulement variable (10) régule la vanne à écoulement variable (6) pour avoir une plage plus étroite d'augmentation ou de diminution du degré d'ouverture.

16. Procédé de fonctionnement d'un climatiseur selon l'une quelconque des revendications 1 à 15.
